# EUROPÄISCHE PATENTANMELDUNG

(11) **EP 3 629 247 A1**
(43) Veröffentlichungstag der Anmeldung: **01.04.2020**
(21) Anmeldenummer: 18197710.9
(22) Anmeldetag: 28.09.2018
(51) Int. Cl.: G06N 3/04, G06N 3/08

(54) **VERFAHREN ZUM ANPASSEN EINES VERBINDUNGSGEWICHTS UND VERBINDUNGSGEWICHTSANPASSUNGSEINHEIT**

(71) Anmelder: Siemens Healthcare GmbH, 91052 Erlangen (DE)
(72) Erfinder: Schmidt, Sebastian, 91085 Weisendorf (DE)

(57) **Zusammenfassung**

Die Erfindung betrifft ein Verfahren zum Anpassen eines Verbindungsgewichts eines neuronalen Netzwerks, umfassend:
- Empfangen, mittels einer ersten Recheneinheit, eines ersten Trainingsdatensatzes, wobei der erste Trainingsdatensatz erste medizinische Bilddaten umfasst,
- Trainieren, mittels der ersten Recheneinheit, eines ersten neuronalen Netzwerks basierend auf dem Trainingsdatensatz, wobei ein erstes Verbindungsgewicht des ersten neuronalen Netzwerks ermittelt wird,
- Bereitstellen, mittels der ersten Recheneinheit, des ersten Verbindungsgewichts für eine Verbindungsgewichtberechnungseinheit,
- Empfangen, mittels der ersten Recheneinheit, eines resultierenden Verbindungsgewichts von der Verbindungsgewichtberechnungseinheit, wobei das resultierende Verbindungsgewicht auf dem ersten Verbindungsgewicht des ersten neuronalen Netzwerks und einem zweiten Verbindungsgewicht eines zweiten neuronalen Netzwerks basiert,
- Anpassen, mittels der ersten Recheneinheit, des ersten Verbindungsgewichts des ersten neuronalen Netzwerks basierend auf dem resultierenden Verbindungsgewicht.

## Beschreibung

Im Bereich des maschinellen Lernens wurden in den letzten Jahren sehr große Fortschritte erzielt. Speziell im Bereich medizinischer Bilddaten gibt es eine große Erwartungshaltung an diese Verfahren, die z. B. im Bereich der automatischen Befundung eingesetzt werden können.

Dabei wird ein "tiefes" neuronales Netz mit medizinischen Daten trainiert und lernt dann, Verknüpfungen zwischen Eingangsdaten und Ausgangsdaten herzustellen. Dazu wird das neuronale Netz unter Verwendung eines Trainingsdatensatzes, der eine große Zahl von Datenpaaren (Eingang und Ergebnis) umfasst, trainiert, um daran entsprechend zu lernen. Dabei kann es sich z. B. um medizinische Röntgenbilder (Eingang) und medizinische Diagnosen (Ergebnis) handeln. Anschließend ist das Netz in der Lage, ein Ergebnis (Diagnose) zu neuen, bisher unbekannten Röntgenbildern mit hoher Genauigkeit vorzuschlagen.

Ein Problem dabei ist, dass für ein sinnvolles Training eine sehr große Zahl von Datensätzen benötigt wird, im Bereich medizinischer Daten aber eine Vielzahl von Einschränkungen gilt, z. B. ist die Eigentümerschaft oft kompliziert, es gilt eine ärztliche Schweigepflicht, besondere Anforderungen an den Datenschutz, der Patient muss einwilligen und so weiter. Das macht es oft unmöglich, eine große Zahl von Datensätzen auf einen einzelnen Rechner zu bringen, um das Training durchzuführen.

Gleichzeitig ist es oft nicht möglich, das Training z. B. nur in einem Krankenhaus durchzuführen, da nur eine Vielzahl von Krankenhäusern über die erforderliche Zahl von Daten verfügen. Gleichzeitig ist es wünschenswert, dass das Training kontinuierlich erfolgt, das also das Gesamtsystem mit jedem Patienten "dazulernt". Das funktioniert aber nicht optimal, wenn die Daten erst aufwändig anonymisiert werden müssen, bevor sie ausgetauscht werden können.

Zum einen können nicht alle personenbezogenen Daten entfernt werden, da diese für die Diagnose relevant sind. Z. B. hängt die Inzidenz von Krankheiten von Alter und Geschlecht ab, daher kann man diese Informationen nicht weglassen. Auch biografische Daten können relevant sein, z. B. Auslandaufenthalte. Personenbezogene Daten können jedoch auch verwendet werden um den Patienten zu identifizieren. Sobald man umfangreiche Datensätze mit einer Vielzahl von Merkmalen hat, wie sie beim Trainieren sinnvoll sind, wird es praktisch immer Merkmalskombinationen geben, mit denen einzelne Patienten eindeutig identifiziert werden können. Zum anderen sind radiologische Bilddaten praktisch immer personenbezogen, da sie Merkmale des Körpers des Patienten beinhalten. Z. B. lässt sich aus einem Kopf-Scan immer ein 3D-Rendering des Gesichtes erstellen, so dass der Patient erkennbar wird, auch wenn Patientenname, Nummer und Geburtsdatum entfernt wurden.

Die Erfindung hat die Aufgabe, eine Alternative zum herkömmlichen Training eines neuronalen Netzwerks mit medizinischen Bilddaten bereitzustellen. Jeder Gegenstand eines unabhängigen Anspruchs löst diese Aufgabe. In den abhängigen Ansprüchen sind weitere vorteilhafte Aspekte der Erfindung berücksichtigt.

Die Erfindung betrifft ein Verfahren zum Anpassen eines Verbindungsgewichts eines neuronalen Netzwerks, umfassend:
- Empfangen, mittels einer ersten Recheneinheit, eines ersten Trainingsdatensatzes, wobei der erste Trainingsdatensatz erste medizinische Bilddaten umfasst,
- Trainieren, mittels der ersten Recheneinheit, eines ersten neuronalen Netzwerks basierend auf dem Trainingsdatensatz, wobei ein erstes Verbindungsgewicht des ersten neuronalen Netzwerks ermittelt wird,
- Bereitstellen, mittels der ersten Recheneinheit, des ersten Verbindungsgewichts für eine Verbindungsgewichtberechnungseinheit,
- Empfangen, mittels der ersten Recheneinheit, eines resultierenden Verbindungsgewichts von der Verbindungsgewichtberechnungseinheit, wobei das resultierende Verbindungsgewicht auf dem ersten Verbindungsgewicht des ersten neuronalen Netzwerks und einem zweiten Verbindungsgewicht eines zweiten neuronalen Netzwerks basiert,
- Anpassen, mittels der ersten Recheneinheit, des ersten Verbindungsgewichts des ersten neuronalen Netzwerks basierend auf dem resultierenden Verbindungsgewicht.

Insbesondere kann ein Verfahren vorgesehen sein, ferner umfassend ein Generieren, mittels der ersten Recheneinheit, einer ersten Datentrennung, welche verhindert, dass der erste Trainingsdatensatz von der ersten Recheneinheit an die Verbindungsgewichtberechnungseinheit übertragen wird, wobei die erste Datentrennung durchlässig für das erste Verbindungsgewicht und das resultierende Verbindungsgewicht ist.

Insbesondere kann vorgesehen sein, dass das erste neuronale Netzwerk und das zweite neuronale Netzwerk dieselbe Verbindungstopologie aufweisen, und/oder dass das erste Verbindungsgewicht des ersten neuronalen Netzwerks und das zweite Verbindungsgewicht des zweiten neuronalen Netzwerks dieselbe Verbindung der Verbindungstopologie betreffen.

Erfindungsgemäß können mehrere Kopien eines neuronalen Netzwerks an verschiedenen Institutionen jeweils lokal installiert und trainiert werden. In den verschiedenen Institutionen sind die neuronalen Netzwerke jeweils in ein lokales Datennetz integriert. Die lokalen Datennetze, und damit insbesondere die neuronalen Netzwerke, sind beispielsweise durch eine Firewall oder ähnliche technische Maßnahmen voneinander getrennt, so dass Daten, insbesondere Personendaten und/oder medizinische Bilddaten nicht zwischen den lokalen Datennetzen, insbesondere nicht zwischen den neuronalen Netzwerken, ausgetauscht werden können.

Ein Verbindungsgewicht ist eine Gewichtung einer Verbindung zwischen zwei Knoten ("Neuronen") eines künstlichen neuronalen Netzwerks. Unter einem neuronalen Netzwerk kann insbesondere ein künstliches neuronales Netzwerk verstanden werden. Ein Trainingsdatensatz kann insbesondere eine Mehrzahl von Trainingspaaren aufweisen, wobei jedes Trainingspaar der Mehrzahl von Trainingspaaren einen Trainingsinput, beispielsweise ein medizinisches Bild und/oder patientenspezifische Daten, und einen Trainingsoutput, beispielsweise ein Bildverarbeitungsergebnis und/oder eine Information zur Unterstützung einer klinischen Entscheidung, aufweist.

Durch das Trainieren des neuronalen Netzwerks werden die Verbindungsgewichte kontinuierlich angepasst. Ein gelerntes Verbindungsgewicht kann direkt an ein anderes neuronales Netzwerk weitergegeben werden und dort als Gewichtung für eine entsprechende Verbindung verwendet werden. Eine Weitergabe von Trainingsdaten, insbesondere von Patientendaten und/oder von medizinischen Bilddaten, ist dafür nicht erforderlich. Die Patientendaten und die medizinischen Bilddaten verlassen somit die jeweilige Institution nicht. Aufgrund der Eigenheit des neuronalen Netzwerks ist es praktisch unmöglich, aus den Verbindungsgewichten die beim Training verwendeten Patientendaten und/oder medizinischen Bilddaten zu ermitteln. Damit können selbstlernende Systeme auch unter den schwierigen Bedingungen des Gesundheitswesens realisiert werden, die insbesondere auch in Echtzeit trainiert werden können.

Insbesondere kann vorgesehen sein, dass das resultierende Verbindungsgewicht ein Mittelwert des ersten Verbindungsgewichts des ersten neuronalen Netzwerks und des zweiten Verbindungsgewichts des zweiten neuronalen Netzwerks ist.

Insbesondere kann vorgesehen sein, dass das resultierende Verbindungsgewicht ein arithmetisches Mittel, ein geometrisches Mittel, ein gewichtetes Mittel oder ein Median des ersten Verbindungsgewichts des ersten neuronalen Netzwerks und des zweiten Verbindungsgewichts des zweiten neuronalen Netzwerks ist.

Das resultierende Verbindungsgewicht kann insbesondere ein gewichtetes arithmetisches Mittel oder ein gewichtetes geometrisches Mittel des ersten Verbindungsgewichts des ersten neuronalen Netzwerks und des zweiten Verbindungsgewichts des zweiten neuronalen Netzwerks sein. Insbesondere kann ein Verbindungsgewicht, das von einer ersten Institution bereitgestellt wurde, mit einer höheren Gewichtung in das gewichtete Mittel eingehen als ein Verbindungsgewicht, das von einer zweiten Institution bereitgestellt wurde, beispielsweise weil die erste Institution als zuverlässiger gilt. Beispielsweise kann die Gewichtung der Verbindungsgewichte für das gewichtete Mittel in Abhängigkeit von einer Zahl der an der jeweiligen Institution behandelten Patienten eingestellt werden. Ferner kann das resultierende Verbindungsgewicht beispielsweise durch Anwendung einer mathematischen Funktion und/oder eines iterativen Verfahrens auf das erste Verbindungsgewicht des ersten neuronalen Netzwerks und auf das zweite Verbindungsgewicht des zweiten neuronalen Netzwerks und/oder auf weitere Verbindungsgewichte von weiteren neuronalen Netzwerken berechnet werden.

Insbesondere kann ein Verfahren vorgesehen sein, ferner umfassend:
- Empfangen, mittels der Verbindungsgewichtberechnungseinheit, des ersten Verbindungsgewichts,
- Empfangen, mittels der Verbindungsgewichtberechnungseinheit, des zweiten Verbindungsgewichts,
- Berechnen, mittels der Verbindungsgewichtberechnungseinheit, des resultierenden Verbindungsgewichts basierend auf dem ersten Verbindungsgewicht des ersten neuronalen Netzwerks und dem zweiten Verbindungsgewicht des zweiten neuronalen Netzwerks, und
- Bereitstellen, mittels der Verbindungsgewichtberechnungseinheit, des resultierenden Verbindungsgewichts.

Insbesondere kann ein Verfahren vorgesehen sein, ferner umfassend ein Vergleichen, mittels der Verbindungsgewichtberechnungseinheit, des resultierenden Verbindungsgewichts mit dem ersten Verbindungsgewicht, um ein Vergleichsergebnis zu erhalten, wobei das resultierende Verbindungsgewicht mittels der Verbindungsgewichtberechnungseinheit in Abhängigkeit von dem Vergleichsergebnis für die erste Recheneinheit bereitgestellt wird.

Das Vergleichen des resultierenden Verbindungsgewichts mit dem ersten Verbindungsgewicht kann insbesondere eine Überprüfung umfassen, ob eine Abweichung des resultierenden Verbindungsgewichts von dem ersten Verbindungsgewicht einen vorgegebenen Abweichungsschwellwert überschreitet. Insbesondere kann vorgesehen sein, dass ein resultierendes Verbindungsgewicht nur dann mittels der Verbindungsgewichtberechnungseinheit für die erste Recheneinheit bereitgestellt wird, wenn die Abweichung des resultierenden Verbindungsgewichts von dem ersten Verbindungsgewicht einen vorgegebenen Abweichungsschwellwert überschreitet.

Damit kann ein Datenvolumen für die Übertragung von resultierenden Verbindungsgewichten von der Verbindungsgewichtberechnungseinheit zu der ersten Recheneinheit verringert werden. Das Datenvolumen kann ferner verringert werden, indem der Austausch von Verbindungsgewichten erst dann erfolgt, wenn das neuronale Netzwerk seit dem letzten Austausch von Verbindungsgewichten mit einer vorgegebenen Mindestanzahl von Trainingspaaren, beispielsweise 100 oder 1000 Trainingspaare, trainiert wurde.

Insbesondere kann ein Verfahren vorgesehen sein, ferner umfassend:
- Empfangen, mittels einer zweiten Recheneinheit, eines zweiten Trainingsdatensatzes, wobei der zweite Trainingsdatensatz zweite medizinische Bilddaten umfasst,
- Trainieren, mittels der zweiten Recheneinheit, des zweiten neuronalen Netzwerks basierend auf dem zweiten Trainingsdatensatz, wobei das zweite Verbindungsgewicht des zweiten neuronalen Netzwerks ermittelt wird,
- Bereitstellen, mittels der zweiten Recheneinheit, des zweiten Verbindungsgewichts für die Verbindungsgewichtberechnungseinheit.

Insbesondere kann ein Verfahren vorgesehen sein, ferner umfassend:
- Empfangen, mittels der zweiten Recheneinheit, des resultierenden Verbindungsgewichts von der Verbindungsgewichtberechnungseinheit,
- Anpassen, mittels der zweiten Recheneinheit, des zweiten Verbindungsgewichts des zweiten neuronalen Netzwerks basierend auf dem resultierenden Verbindungsgewicht.

Insbesondere kann ein Verfahren vorgesehen sein, ferner umfassend ein Generieren, mittels der zweiten Recheneinheit, einer zweiten Datentrennung, welche verhindert, dass der erste Trainingsdatensatz von der zweiten Recheneinheit an die Verbindungsgewichtberechnungseinheit übertragen wird, wobei die zweite Datentrennung durchlässig für das zweite Verbindungsgewicht und das resultierende Verbindungsgewicht ist.

Die Erfindung betrifft ferner eine Verbindungsgewichtsanpassungseinheit zum Anpassen eines Verbindungsgewichts eines neuronalen Netzwerks, umfassend:
- eine Empfangseinheit zum Empfangen eines ersten Trainingsdatensatzes, wobei der erste Trainingsdatensatz erste medizinische Bilddaten umfasst,
- eine Trainingseinheit zum Trainieren eines ersten neuronalen Netzwerks basierend auf dem Trainingsdatensatz, wobei ein erstes Verbindungsgewicht des ersten neuronalen Netzwerks ermittelt wird,
- eine Bereitstellungseinheit zum Bereitstellen des ersten Verbindungsgewichts an eine Verbindungsgewichtberechnungseinheit,
- Empfangseinheit zum Empfangen eines resultierenden Verbindungsgewichts von der Verbindungsgewichtberechnungseinheit, wobei das resultierende Verbindungsgewicht auf dem ersten Verbindungsgewicht des ersten neuronalen Netzwerks und dem zweiten Verbindungsgewicht eines zweiten neuronalen Netzwerks basiert,
- Anpassungseinheit zum Anpassen des ersten Verbindungsgewichts des ersten neuronalen Netzwerks basierend auf dem resultierenden Verbindungsgewicht.

Die Erfindung betrifft ferner ein System, aufweisend eine erste Recheneinheit, wobei die erste Recheneinheit die Verbindungsgewichtsanpassungseinheit nach Anspruch 11 und das erste neuronale Netzwerk aufweist.

Insbesondere kann vorgesehen sein, dass das System ferner die Verbindungsgewichtberechnungseinheit aufweist und/oder dass das System ferner die zweite Recheneinheit aufweist, wobei die zweite Recheneinheit das zweite neuronale Netzwerk aufweist.

Insbesondere kann vorgesehen sein, dass das System ferner wenigstens eine weitere Recheneinheit mit einem neuronalen Netzwerk aufweist, wobei die zweite Recheneinheit und die wenigstens eine weitere Recheneinheiten zusammen die Verbindungsgewichtberechnungseinheit bilden.

Insbesondere kann das System zum Ausführen eines Verfahrens nach einem oder mehreren der hiermit offenbarten Aspekte ausgebildet sein.

Im Rahmen der Erfindung können Merkmale, welche in Bezug auf unterschiedliche Ausführungsformen der Erfindung und/oder unterschiedliche Anspruchskategorien (Verfahren, Verwendung, Vorrichtung, System, Anordnung usw.) beschrieben sind, zu weiteren Ausführungsformen der Erfindung kombiniert werden. Beispielsweise kann ein Anspruch, der eine Vorrichtung betrifft, auch mit Merkmalen, die im Zusammenhang mit einem Verfahren beschrieben oder beansprucht sind, weitergebildet werden und umgekehrt. Funktionale Merkmale eines Verfahrens können dabei durch entsprechend ausgebildete gegenständliche Komponenten ausgeführt werden. Neben den in dieser Anmeldung ausdrücklich beschriebenen Ausführungsformen der Erfindung sind vielfältige weitere Ausführungsformen der Erfindung denkbar, zu denen der Fachmann gelangen kann, ohne den Bereich der Erfindung zu verlassen, der durch die Ansprüche vorgegeben ist.

Die Verwendung der unbestimmten Artikel "ein" bzw. "eine" schließt nicht aus, dass das betroffene Merkmal auch mehrfach vorhanden sein kann. Die Verwendung des Ausdrucks "aufweisen" schließt nicht aus, dass die mittels des Ausdrucks "aufweisen" verknüpften Begriffe identisch sein können. Beispielsweise weist die medizinische Bildgebungsvorrichtung die medizinische Bildgebungsvorrichtung auf. Die Verwendung des Ausdrucks "Einheit" schließt nicht aus, dass der Gegenstand, auf den sich der Ausdruck "Einheit" bezieht, mehrere Komponenten aufweisen kann, die räumlich voneinander separiert sind.

Der Ausdruck "basierend auf" kann im Kontext der vorliegenden Anmeldung insbesondere im Sinne des Ausdrucks "unter Verwendung von" verstanden werden. Insbesondere schließt eine Formulierung, der zufolge ein erstes Merkmal basierend auf einem zweiten Merkmal erzeugt (alternativ: ermittelt, bestimmt etc.) wird, nicht aus, dass das erste Merkmal basierend auf einem dritten Merkmal erzeugt (alternativ: ermittelt, bestimmt etc.) werden kann.

Im Folgenden wird die Erfindung anhand von Ausführungsbeispielen unter Hinweis auf die beigefügten Figuren erläutert. Die Darstellung in den Figuren ist schematisch, stark vereinfacht und nicht zwingend maßstabsgetreu.

Es zeigen:
Die Fig. 1 ein Ablaufdiagramm eines Verfahrens zum Anpassen eines Verbindungsgewichts eines neuronalen Netzwerks,
die Fig. 2 eine Verbindungsgewichtsanpassungseinheit,
die Fig. 3 ein Ablaufdiagramm eines Verfahrens zum Anpassen eines ersten Verbindungsgewichts eines ersten neuronalen Netzwerks und eines zweiten Verbindungsgewichts eines zweiten neuronalen Netzwerks,
die Fig. 4 ein System mit einer ersten Recheneinheit, einer zweiten Recheneinheit und einer Verbindungsgewichtberechnungseinheit, die separat von der ersten Recheneinheit und der zweiten Recheneinheit ausgebildet ist,
die Fig. 5 ein System mit einer ersten Recheneinheit, einer zweiten Recheneinheit, einer dritten Recheneinheit und einer Verbindungsgewichtberechnungseinheit, die von der zweiten Recheneinheit und der dritten Recheneinheit gebildet wird.

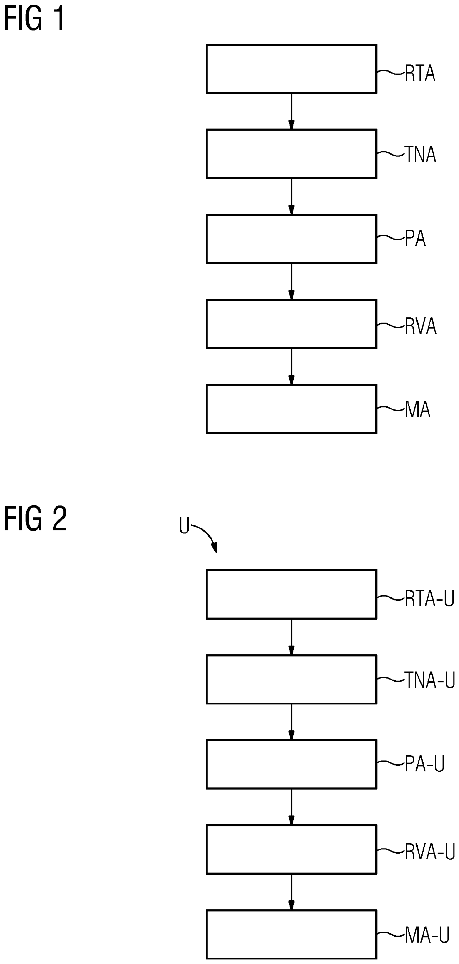

Die Fig. 1 zeigt ein Ablaufdiagramm eines Verfahren zum Anpassen eines Verbindungsgewichts eines neuronalen Netzwerks, umfassend:
- Empfangen RTA, mittels einer ersten Recheneinheit XA, eines ersten Trainingsdatensatzes, wobei der erste Trainingsdatensatz erste medizinische Bilddaten umfasst,
- Trainieren TNA, mittels der ersten Recheneinheit XA, eines ersten neuronalen Netzwerks NA basierend auf dem Trainingsdatensatz, wobei ein erstes Verbindungsgewicht A1 des ersten neuronalen Netzwerks NA ermittelt wird,
- Bereitstellen PA, mittels der ersten Recheneinheit XA, des ersten Verbindungsgewichts A1 für eine Verbindungsgewichtberechnungseinheit V,
- Empfangen RVA, mittels der ersten Recheneinheit XA, eines resultierenden Verbindungsgewichts V1 von der Verbindungsgewichtberechnungseinheit V, wobei das resultierende Verbindungsgewicht V1 auf dem ersten Verbindungsgewicht A1 des ersten neuronalen Netzwerks NA und einem zweiten Verbindungsgewicht B1 eines zweiten neuronalen Netzwerks NB basiert, - Anpassen MA, mittels der ersten Recheneinheit XA, des ersten Verbindungsgewichts A1 des ersten neuronalen Netzwerks NA basierend auf dem resultierenden Verbindungsgewicht V1.

Die Fig. 2 zeigt eine Verbindungsgewichtsanpassungseinheit U zum Anpassen eines Verbindungsgewichts eines neuronalen Netzwerks, umfassend:
- eine Empfangseinheit RTA-U zum Empfangen RTA eines ersten Trainingsdatensatzes, wobei der erste Trainingsdatensatz erste medizinische Bilddaten umfasst,
- eine Trainingseinheit TNA-U zum Trainieren TNA eines ersten neuronalen Netzwerks NA basierend auf dem Trainingsdatensatz, wobei ein erstes Verbindungsgewicht A1 des ersten neuronalen Netzwerks NA ermittelt wird,
- eine Bereitstellungseinheit PA-U zum Bereitstellen PA des ersten Verbindungsgewichts A1 an eine Verbindungsgewichtberechnungseinheit V,
- Empfangseinheit RV-U zum Empfangen RV eines resultierenden Verbindungsgewichts V1 von der Verbindungsgewichtberechnungseinheit V, wobei das resultierende Verbindungsgewicht V1 auf dem ersten Verbindungsgewicht A1 des ersten neuronalen Netzwerks NA und dem zweiten Verbindungsgewicht B1 eines zweiten neuronalen Netzwerks NB basiert, und
- Anpassungseinheit MA-U zum Anpassen MA des ersten Verbindungsgewichts A1 des ersten neuronalen Netzwerks NA basierend auf dem resultierenden Verbindungsgewicht V1.

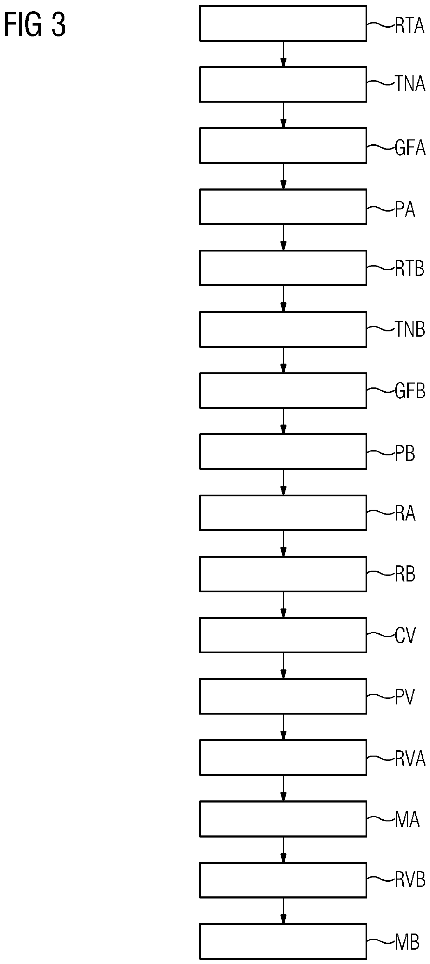

Die Fig. 3 zeigt ein Ablaufdiagramm eines Verfahrens zum Anpassen eines ersten Verbindungsgewichts A1 eines ersten neuronalen Netzwerks NA und eines zweiten Verbindungsgewichts B1 eines zweiten neuronalen Netzwerks NB, umfassend, zusätzlich zu den in der Fig. 1 gezeigten Schritten:
- Generieren GFA, mittels der ersten Recheneinheit XA, einer ersten Datentrennung FAB, FAS, welche verhindert, dass der erste Trainingsdatensatz von der ersten Recheneinheit XA an die Verbindungsgewichtberechnungseinheit V übertragen wird, wobei die erste Datentrennung FAB, FAS durchlässig für das erste Verbindungsgewicht A1 und das resultierende Verbindungsgewicht V1 ist,
- Empfangen RTB, mittels einer zweiten Recheneinheit XB, eines zweiten Trainingsdatensatzes, wobei der zweite Trainingsdatensatz zweite medizinische Bilddaten umfasst,
- Trainieren TNB, mittels der zweiten Recheneinheit XB, des zweiten neuronalen Netzwerks NB basierend auf dem zweiten Trainingsdatensatz, wobei das zweite Verbindungsgewicht B1 des zweiten neuronalen Netzwerks NB ermittelt wird,
- Bereitstellen PB, mittels der zweiten Recheneinheit XB, des zweiten Verbindungsgewichts B1 für die Verbindungsgewichtberechnungseinheit V,
- Generieren GFB, mittels der zweiten Recheneinheit XB, einer zweiten Datentrennung FBS, welche verhindert, dass der erste Trainingsdatensatz von der zweiten Recheneinheit XB an die Verbindungsgewichtberechnungseinheit V übertragen wird,
- wobei die zweite Datentrennung FBS durchlässig für das zweite Verbindungsgewicht B1 und das resultierende Verbindungsgewicht V1 ist.
- Empfangen RA, mittels der Verbindungsgewichtberechnungseinheit V, des ersten Verbindungsgewichts A1,
- Empfangen RB, mittels der Verbindungsgewichtberechnungseinheit V, des zweiten Verbindungsgewichts B1,
- Berechnen CV, mittels der Verbindungsgewichtberechnungseinheit V, des resultierenden Verbindungsgewichts V1 basierend auf dem ersten Verbindungsgewicht A1 des ersten neuronalen Netzwerks NA und dem zweiten Verbindungsgewicht B1 des zweiten neuronalen Netzwerks NB, und
- Bereitstellen PV, mittels der Verbindungsgewichtberechnungseinheit V, des resultierenden Verbindungsgewichts V1,
- Empfangen RVB, mittels der zweiten Recheneinheit XB, des resultierenden Verbindungsgewichts V1 von der Verbindungsgewichtberechnungseinheit V,
- Anpassen MB, mittels der zweiten Recheneinheit XB, des zweiten Verbindungsgewichts B1 des zweiten neuronalen Netzwerks NB basierend auf dem resultierenden Verbindungsgewicht V1.

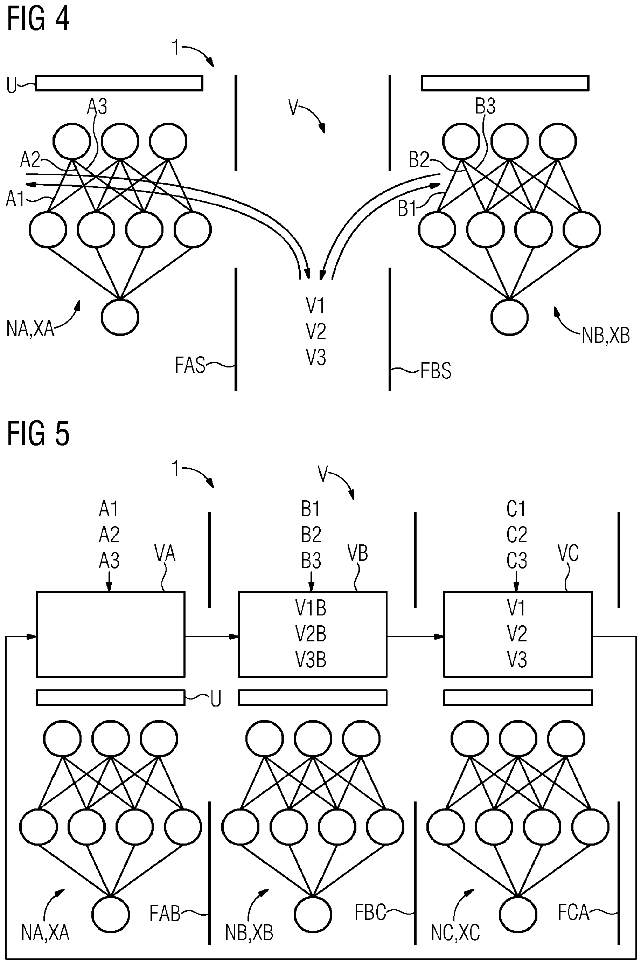

Die Fig. 4 zeigt ein System 1 mit einer ersten Recheneinheit XA mit der Verbindungsgewichtsanpassungseinheit U und dem ersten neuronalen Netzwerk NA, einer zweiten Recheneinheit XB mit dem zweiten neuronalen Netzwerk NB und einer Verbindungsgewichtberechnungseinheit V, die separat, insbesondere räumlich entfernt, von der ersten Recheneinheit XA und der zweiten Recheneinheit XB ausgebildet ist. Insbesondere kann die Verbindungsgewichtberechnungseinheit V als ein zentraler Server ausgebildet sein, zu dem die Recheneinheiten XA, XB jeweils eine Verbindung aufbauen können, mit welcher durch die Datentrennung FAS, FBS hindurch die Verbindungsgewichte übertragen werden können. Die Datentrennung FAS, FBS kann beispielsweise in Form einer Firewall implementiert sein. Die Verbindung zur Übertragung der Verbindungsgewichte kann beispielsweise in Form einer VPN-Verbindung implementiert sein. Insbesondere können die Recheneinheiten XA, XB und XC und/oder der zentrale Server jeweils mit dem Internet verbunden sein.

Die Fig. 5 zeigt ein System 1 mit einer ersten Recheneinheit XA, einer zweiten Recheneinheit XB, einer dritten Recheneinheit XC mit einem dritten neuronalen Netzwerk NC und einer Verbindungsgewichtberechnungseinheit V, die von der zweiten Recheneinheit XB und der dritten Recheneinheit XC gebildet wird. Beispielsweise wenn ein zentraler Server nicht gewünscht ist, können die einzelnen Recheneinheit auch untereinander die Verbindungsgewichte austauschen.

Mittels der ersten Recheneinheit XA wird ein Verbindungsgewicht A1, A2, A3 des ersten neuronalen Netzwerks NA für die zweite Recheneinheit XB bereitstellt. Mittels der zweiten Recheneinheit XB wird ein Mittelwert, insbesondere ein gewichteter Mittelwert, V1B, V2B, V3B des Verbindungsgewichts A1, A2, A3 des ersten neuronalen Netzwerks NA und des Verbindungsgewichts B1, B2, B3 des zweiten neuronalen Netzwerks NB berechnet und für die dritte Recheneinheit XC bereitgestellt.

Mittels der dritten Recheneinheit XC wird ein resultierendes Verbindungsgewicht V1, V2, V3 basierend auf dem Mittelwert V1B, V2B, V3B des Verbindungsgewichts A1, A2, A3 des ersten neuronalen Netzwerks NA und des Verbindungsgewichts B1, B2, B3 des zweiten neuronalen Netzwerks NB und des dritten neuronalen Netzwerks XC und auf dem Verbindungsgewicht C1, C2, C3, beispielsweise in Form eines gewichteten Mittelwerts, ermittelt und für die erste Recheneinheit XA bereitgestellt.

Die Recheneinheiten XB und XC weisen jeweils eine eigene Verbindungsgewichtsanpassungseinheit aus, die der Verbindungsgewichtsanpassungseinheit U der Recheneinheit XA entspricht, so dass auch die Verbindungsgewichte B1, B2, B3, C1, C2 und C3 entsprechend angepasst werden können. Zwischen der zweiten Recheneinheit XB und der dritten Recheneinheit XC kann eine Reihe von Recheneinheiten, die jeweils ein neuronales Netzwerk aufweisen, angeordnet werden.

Insbesondere kann mittels jeder der Recheneinheiten der Reihe von Recheneinheiten an einem Eingang der jeweiligen Recheneinheit ein Verknüpfungsgewicht von der vorhergehenden Recheneinheit empfangen werden, ein Mittelwert, insbesondere ein gewichteter Mittelwert, des empfangenen Verknüpfungsgewichts und des Verknüpfungsgewichts des neuronalen Netzwerks der jeweiligen Recheneinheit berechnet werden und an einem Ausgang der jeweiligen Recheneinheit für die nächste folgende Recheneinheit bereitgestellt werden. Insbesondere können die neuronalen Netzwerke der Recheneinheiten fortlaufend trainiert werden, während die Verknüpfungsgewichte von den Recheneinheiten verarbeitet werden.

## Patentansprüche

1. Verfahren zum Anpassen eines Verbindungsgewichts eines neuronalen Netzwerks, umfassend:
- Empfangen (RTA), mittels einer ersten Recheneinheit (XA), eines ersten Trainingsdatensatzes, wobei der erste Trainingsdatensatz erste medizinische Bilddaten umfasst,
- Trainieren (TNA), mittels der ersten Recheneinheit (XA), eines ersten neuronalen Netzwerks (NA) basierend auf dem Trainingsdatensatz, wobei ein erstes Verbindungsgewicht (A1) des ersten neuronalen Netzwerks (NA) ermittelt wird,
- Bereitstellen (PA), mittels der ersten Recheneinheit (XA), des ersten Verbindungsgewichts (A1) für eine Verbindungsgewichtberechnungseinheit (V),
- Empfangen (RVA), mittels der ersten Recheneinheit (XA), eines resultierenden Verbindungsgewichts (V1) von der Verbindungsgewichtberechnungseinheit (V), wobei das resultierende Verbindungsgewicht (V1) auf dem ersten Verbindungsgewicht (A1) des ersten neuronalen Netzwerks (NA) und einem zweiten Verbindungsgewicht (B1) eines zweiten neuronalen Netzwerks (NB) basiert,
- Anpassen (MA), mittels der ersten Recheneinheit (XA), des ersten Verbindungsgewichts (A1) des ersten neuronalen Netzwerks (NA) basierend auf dem resultierenden Verbindungsgewicht (V1).

2. Verfahren nach Anspruch 1, ferner umfassend:
- Generieren (GFA), mittels der ersten Recheneinheit (XA), einer ersten Datentrennung (FAB, FAS), welche verhindert, dass der erste Trainingsdatensatz von der ersten Recheneinheit (XA) an die Verbindungsgewichtberechnungseinheit (V) übertragen wird,
- wobei die erste Datentrennung (FAB, FAS) durchlässig für das erste Verbindungsgewicht (A1) und das resultierende Verbindungsgewicht (V1) ist.

3. Verfahren nach Anspruch 2,
- wobei das erste neuronale Netzwerk (NA) und das zweite neuronale Netzwerk (NB) dieselbe Verbindungstopologie aufweisen,
- wobei das erste Verbindungsgewicht (A1) des ersten neuronalen Netzwerks (NA) und das zweite Verbindungsgewicht (B1) des zweiten neuronalen Netzwerks (NB) dieselbe Verbindung der Verbindungstopologie betreffen.

4. Verfahren nach einem der Ansprüche 1 bis 3,
- wobei das resultierende Verbindungsgewicht (V1) ein Mittelwert des ersten Verbindungsgewichts (A1) des ersten neuronalen Netzwerks (NA) und des zweiten Verbindungsgewichts (B1) des zweiten neuronalen Netzwerks (NB) ist.

5. Verfahren nach einem der Ansprüche 1 bis 4,
- wobei das resultierende Verbindungsgewicht (V1) ein arithmetisches Mittel, ein geometrisches Mittel, ein gewichtetes Mittel oder ein Median des ersten Verbindungsgewichts (A1) des ersten neuronalen Netzwerks (NA) und des zweiten Verbindungsgewichts (B1) des zweiten neuronalen Netzwerks (NB) ist.

6. Verfahren nach einem der Ansprüche 1 bis 5, ferner umfassend:
- Empfangen (RA), mittels der Verbindungsgewichtberechnungseinheit (V), des ersten Verbindungsgewichts (A1),
- Empfangen (RB), mittels der Verbindungsgewichtberechnungseinheit (V), des zweiten Verbindungsgewichts (B1),
- Berechnen (CV), mittels der Verbindungsgewichtberechnungseinheit (V), des resultierenden Verbindungsgewichts (V1) basierend auf dem ersten Verbindungsgewicht (A1) des ersten neuronalen Netzwerks (NA) und dem zweiten Verbindungsgewicht (B1) des zweiten neuronalen Netzwerks (NB), und
- Bereitstellen (PV), mittels der Verbindungsgewichtberechnungseinheit (V), des resultierenden Verbindungsgewichts (V1) .

7. Verfahren nach einem der Ansprüche 1 bis 6, ferner umfassend:
- Vergleichen, mittels der Verbindungsgewichtberechnungseinheit (V), des resultierenden Verbindungsgewichts (V1) mit dem ersten Verbindungsgewicht (A1), um ein Vergleichsergebnis zu erhalten,
- wobei das resultierende Verbindungsgewicht (V1) mittels der Verbindungsgewichtberechnungseinheit (V) in Abhängigkeit von dem Vergleichsergebnis für die erste Recheneinheit (XA) bereitgestellt wird.

8. Verfahren nach einem der Ansprüche 1 bis 7, ferner umfassend:
- Empfangen (RTB), mittels einer zweiten Recheneinheit (XB), eines zweiten Trainingsdatensatzes, wobei der zweite Trainingsdatensatz zweite medizinische Bilddaten umfasst,
- Trainieren (TNB), mittels der zweiten Recheneinheit (XB), des zweiten neuronalen Netzwerks (NB) basierend auf dem zweiten Trainingsdatensatz, wobei das zweite Verbindungsgewicht (B1) des zweiten neuronalen Netzwerks (NB) ermittelt wird,
- Bereitstellen (PB), mittels der zweiten Recheneinheit (XB), des zweiten Verbindungsgewichts (B1) für die Verbindungsgewichtberechnungseinheit (V).

9. Verfahren nach einem der Ansprüche 1 bis 8, ferner umfassend:
- Empfangen (RVB), mittels der zweiten Recheneinheit (XB), des resultierenden Verbindungsgewichts (V1) von der Verbindungsgewichtberechnungseinheit (V),
- Anpassen (MB), mittels der zweiten Recheneinheit (XB), des zweiten Verbindungsgewichts (B1) des zweiten neuronalen Netzwerks (NB) basierend auf dem resultierenden Verbindungsgewicht (V1).

10. Verfahren nach einem der Ansprüche 1 bis 8, ferner umfassend:
- Generieren (GFB), mittels der zweiten Recheneinheit (XB), einer zweiten Datentrennung (FBS), welche verhindert, dass der erste Trainingsdatensatz von der zweiten Recheneinheit (XB) an die Verbindungsgewichtberechnungseinheit (V) übertragen wird,
- wobei die zweite Datentrennung (FBS) durchlässig für das zweite Verbindungsgewicht (B1) und das resultierende Verbindungsgewicht (V1) ist.

11. Verbindungsgewichtsanpassungseinheit (U) zum Anpassen eines Verbindungsgewichts eines neuronalen Netzwerks, umfassend:
- eine Empfangseinheit (RTA-U) zum Empfangen (RTA) eines ersten Trainingsdatensatzes, wobei der erste Trainingsdatensatz erste medizinische Bilddaten umfasst,
- eine Trainingseinheit (TNA-U) zum Trainieren (TNA) eines ersten neuronalen Netzwerks (NA) basierend auf dem Trainingsdatensatz, wobei ein erstes Verbindungsgewicht (A1) des ersten neuronalen Netzwerks (NA) ermittelt wird,
- eine Bereitstellungseinheit (PA-U) zum Bereitstellen (PA) des ersten Verbindungsgewichts (A1) an eine Verbindungsgewichtberechnungseinheit (V),
- Empfangseinheit (RV-U) zum Empfangen (RV) eines resultierenden Verbindungsgewichts (V1) von der Verbindungsgewichtberechnungseinheit (V), wobei das resultierende Verbindungsgewicht (V1) auf dem ersten Verbindungsgewicht (A1) des ersten neuronalen Netzwerks (NA) und dem zweiten Verbindungsgewicht (B1) eines zweiten neuronalen Netzwerks (NB) basiert, und
- Anpassungseinheit (MA-U) zum Anpassen (MA) des ersten Verbindungsgewichts (A1) des ersten neuronalen Netzwerks (NA) basierend auf dem resultierenden Verbindungsgewicht (V1).

12. System (1), aufweisend eine erste Recheneinheit (XA), wobei die erste Recheneinheit (XA) die Verbindungsgewichtsanpassungseinheit (U) nach Anspruch 11 und das erste neuronale Netzwerk (NA) aufweist.

13. System (1) nach Anspruch 12, ferner aufweisend die Verbindungsgewichtberechnungseinheit (V) und/oder eine zweite Recheneinheit (XB), wobei die zweite Recheneinheit (XB) das zweite neuronale Netzwerk (NB) aufweist.

14. System (1) nach Anspruch 13, ferner aufweisend wenigstens eine weitere Recheneinheit (XC) mit einem weiteren neuronalen Netzwerk (NC), wobei die zweite Recheneinheit (XB) und die wenigstens eine weitere Recheneinheiten (XC) zusammen die Verbindungsgewichtberechnungseinheit (V) bilden.

15. System (1) nach einem der Ansprüche 12 bis 14, welches zum Ausführen eines Verfahrens nach einem der Ansprüche 1 bis 10 ausgebildet ist.
